# EUROPEAN PATENT SPECIFICATION

(11) **EP 1 831 850 B1**
(45) Date of publication and mention of the grant of the patent: **21.04.2010**
(21) Application number: 05823582.1
(22) Date of filing: 23.12.2005
(51) Int. Cl.: G08B 21/02, G01S 5/00

(54) **POSITION FINDING SYSTEM FOR PEOPLE, ANIMALS AND OBJECTS**
POSITIONSFINDESYSTEM FÜR PERSONEN, TIERE UND OBJEKTE
SYSTEME DE DETECTION D'EMPLACEMENT POUR PERSONNES, ANIMAUX ET OBJETS

(30) Priority: 23.12.2004 IT BA20040059
(43) Date of publication of application: 12.09.2007
(73) Proprietor: MATRIX S.p.A., 70014 Conversano (BA) (IT)
(72) Inventor: D'ALESSANDRO, Leonardo, I-70014 Conversano (BA) (IT); SACCHETTI, Antonio, I-70014 Conversano (BA) (IT); D'ARGENTO, Giovanni, I-70014 Conversano (BA) (IT)
(74) Representative: Sarpi, Maurizio
(86) International application number: PCT/IT2005/000762
(87) International publication number: WO 2006/067826

(56) References cited:
- EP-A- 0 811 959
- EP-A- 1 282 095
- US-B1- 6 693 585
- US-B2- 6 674 368

## Description

The present invention relates to an innovatory electronic system for the position finding of people, animals, and things.

The demand for monitoring the movements of children, elderly people, handicapped, pets, means of transport, etc. in order to guarantee their security is still growing up. Furthermore, the increasing in the number of crimes, generally and specifically those towards children, involves a greater demand of concrete preventive measures to the market. The growing demand of the market for such type of products is, for example, proved by that great Companies of management of thematic parks, such as the Company managing the vast park "Legoland" at Billund in Denmark, have been using systems allowing the path of each child inside the area of the park to be traced for the last years with the aim at increasing the number of visitors and inducing the parents to remove the fear of missing their children within a vast, crowded area. The present systems used for finding people, animals and things can mainly be divided into three great families, "GSM", "GPS + GSM" and wireless systems, as a function of the applied technology.

The position finding process of the first family ("GSM" telephone system) allows the approximate distance of a "GSM" terminal from the base radio station to which it is connected to be detected. By repenting sequencially the calculation of the distance from several surrounding cells (BTS) and carrying out some operations of trigonometric triangulation, it is possible to take the approximate bearing of the location of a mobile phone over the area. By this method the bearing of the location of a "GSM" terminal could be taken by using the already available information of the "GSM" network, without controlling in any way the mobile phones. However, such a service is not still available on the market but can only be used by telephone service providers and police. In this case the position finding is called "cell-based" position finding, i.e. based upon the position finding of the cell "lodging" the mobile phone time by time. The precision by which the position finding of the location of a "GSM" phone can be carried out depends then on the characteristics of the cell and the transmission conditions of the mobile phone. To this end, four different position finding modalities by "GSM" systems are possible today: omnidirectional cell; omnidirectional cell associated with time advance; sector cell; and sector cell associated with time advance.

The omnidirectional cell is formed by antennas radiating to all directions and allows the location of a terminal to be detected with a maximum precision equal to the radius of the cell, i.e. it can be only stated that the terminal is within the covering area of the cell.

The omnidirectional cell associated with time advance allows the position finding precision to be increased as the network induces the mobile phone to perform a connection and calculates the distance between terminal and antenna on the basis of the transmission delay time, thus reducing the position finding area from a circle to a circular crown. The terminal is then spotted inside a crown but the angular position of the same is still unknown.

By the sector cell (most frequent case) the station radiates towards several sectors, thus allowing the terminal to be spotted with the maximum precision of the sector covered by the cell even if, however, the distance from the antenna is unknown.

The sector cell associated with time advance allows the area position finding precision to be increased, such area being reduced from a circular sector to a circular crown sector but also in this case its angular position remains unknown.

To increase the precision of the measurement one can resort to several BTS (more cells) and then calculate the location of the mobile phone by a triangulation. The operation is more complex but allows more precise results to be obtained.

Although the technology of the state of art is able to take the bearing of the location of a "GSM" mobile phone, a bearing service available to all users is still not active today.

The "GPS" (Global Positioning System) is the most known and diffused position finding system. It is based upon the principle of reception of radio signals from artificial satellites which are processed on earth by measurement apparatus to find the location of a person, animal, or object. Such system is based upon trigonometric calculations and iterations having as fixed reference point the propagation speed of the electromagnetic waves, each "GPS" transceiver being able to receive simultaneously the radio signals from a plurality of satellites and to calculate the distance from the latter on the basis of the received different information. Actually, any type of "GPS" apparatus is a receiver only, therefore it is not able to transmit any information.

To make information available that "GPS" is able to generate as well as to extend the possibilities of its use, the "GPS" system has been then integrated with the "GSM" system because a "GSM" mobile radio system coupled to a satellite receiver allows the coordinates of the detected position to be sent to the user. The "GPS + GSM" system is most used to send data generated by a "GPS" by using the cellular telephone system in real time, although such system as well as the satellite antitheft device is still very expensive today.

Wireless systems generally are used for the communication, monitoring and service of control systems in which the signals propagate like waves through the space and not through wires or transmission cables. In a wireless system the transmission is mainly carried out via radiofrequency (RF) or via infrared (IR). The wireless position finding systems, in the simplest form of identification systems, consist of cards provided with microchips for logic and radio communication functions via antenna, the so-called transponder, and a radiofrequency reading device that receives and decodes the information contained therein. The information red is then transmitted on a net and processed. The range of such wireless identification systems (RFID) is presently very low (some metres). Another little advantageous reason of said systems is the presence of different standards. This has prevented such systems from being widely spread as effective position finding systems.

Wireless technology based upon the transmission of radio waves emitted by a transmitter (that can be put inside a bracelet, watch, etc.) allows the waves to be picked up by a plurality of receivers. Also in this case the detection of the distance from the transmitter to the receiver can mainly be carried out by two different modes, i.e. the measurement of both the radio signal power and the time taken by the same radio signal to reach the receiver. The most precise definition of the position occupied by the transmitter is instead obtained by a triangulation. Position finding systems of this type are, for example, those using "Wi-Fi" technology or those used by Beghelli and Quik Trak; even if there are many companies that operate in the production of position finding systems, only the above-mentioned companies are disclosed thereafter showing up their limitations and drawbacks as they are more representative of the wireless technology applied to the lookout for people, animals, and things. The "Wi-Fi" ("Wireless Fidelity") system is a technology that allows data to be exchanged at high rate (11 to 54 Mbit per second) without using any net cable, but keeping a complete freedom of movement. "Wi-Fi" transmits via radio usually at the frequency of 2.45 GHz and is based on IEEE 802.11 standard (Institute of Electrical and Electronics Engineers) allowing fast wireless connections to Internet. It is enough to install the wireless card into the computer, to look for an antenna radiating the signal (hotspot) and to start wide band navigation.

The wireless card is able to transfer data between personal computers by using a signal based on highfrequency radio waves. The communication is ensured by the use of suitable devices interfaced with PCs able to transmit and receive radio signals. Just this r capability of transmitting a signal is at the base of a position finding system with "Wi-Fi" technology.

The minimum configuration requires only two computers, both provided with a "Wi-Fi" card and located within a range of one hundred metres to create a wireless net.

By connecting a "Wi-Fi" access point to the router, any computer provided with a "Wi-Fi" card in the range of one hundred metres holds a dialogue not only with all other PCs but can also have free access to Internet.

By using this technology it is possible to provide position finding systems which, however, have considerable limitations as better explained thereafter.

The position finding system so-called "Safe Child" of Beghelli consists of a receiving base unit under the control of an adult which emits an acoustic signal as the child provided with a transmitting bracelet moves away beyond a predetermined distance which can be regulated according to three different values. Actually, such position finding system is not based on a net but is limited to an exchange of information between only two units. To calculate the distance between transmitter and receiver the device "Safe Child" calculates the power of the received signal which is a function of the distance but only in case of lack of obstacles between the same transmitter and receiver.

"QUIK TRAK" system, that has found application in some countries of the world but not in Italy, allows vehicles and sometimes people to be spotted by means of a transceiver that sends radio signals to receivers (fixed stations) distributed over the territory. The position finding is carried out by the measurement of the time taken by the signal to reach the different fixed stations. To define with enough precision the path followed by the vehicle upon its moving it is necessary that all receivers are perfectly synchronised with one another in order to provide only one measurement of time. To this end, each receiver is equipped with a "GPS" module provided with a sufficiently precise' time counter or timing.

The drawbacks of the technologies of the state of art will be disclosed and shown up thereafter.

The first great limitation of the systems based upon "GPS" is given by the impossibility of operation in closed rooms. Actually, it is indispensable that the satellite receiver is at sight simultaneously from at least four satellites of the orbiting fleet. However, such a system has operating difficulties also in open air just because of an overcast sky. To this end, new so-called "predictive" systems able to operate also in closed rooms are being experimented. Such systems, however, are extremely complex and based upon a probabilistic calculation of the position which is moreover very expensive.

In addition, the "GPS" system was not created for commercial but wartime purposes, therefore, there is not any warranty of a service regularity. The European satellite system Galileo should solve this problem by ensuring also a considerable precision but presently it is not fully usable.

Another drawback of "GPS" systems is the location of a person or an object on which a satellite receiver is installed. Such a location is carried out by the calculation of the coordinates of a point on the basis of an estimation of the response time of the signal transmitted by the satellites. The processing, in fact, is carried out by the same receiver but it is essential that such receiver is coupled to a "GSM" module which sends the information regarding the above location in the form of coordinates for the latter to be made known to third parties. Of course, besides a more complex and expensive hardware of the system, a "GSM" module has also the drawback of high operating cost connected to the exchange of information.

A further drawback of the "GPS + GSM" systems is usually given by the size of the apparatus and even if receivers with the size of a watch have been manufactured by means of recent technologies, the necessary miniaturization of the antenna involves generally reception problems especially if it is not correctly oriented or partially "shaded" (it is sufficient a metal table to prevent it from operating!).

Another drawback is due to the fact that both "GPS" systems and "GSM" systems do not use the low-power technology with the consequence that the operating range of a portable apparatus of this type amounts to some days as a maximum provided that it is fed by its own cells. This is not a particular problem if the system is used for the position finding of vehicles provided with their own cells (or able to be fed by their own recharging system) but it is self-evident that such a system has a great limitation to the location of children and animals as it requires a continuous engagement to recharge the cells, which could be felt by the user as excessively bothersome or, in any case, not of immediate utility. The missing use of low-power systems in both "GSM" and "GPS + GSM" systems produces the further drawback that they are not adapted for the position finding of subjects that are particularly sensitive to the effects of the electromagnetic radiations on the health. On the other hand, nobody would conceive to place a transmitting apparatus with a power of about 1 Watt in contact with the body of a child continuously in time.

Another not less important drawback is the economic aspect. Even if "GPS" apparatus are even more spread, they still have a high cost and are then not particularly adapted to those applications which could bring to the loss or the damage of the apparatus.

"GPS + GSM" and "GSM" position finding systems have the further drawback of high power consumption that prevent them from being used in comfortable and durable manner with autonomy of operation as far as a particular type of users such as children, animals, and objects without power supply is concerned.

Other already existing low-consumption systems of the wireless family have no optimum precision characteristics regarding the position finding as well as a very low covering range. Conversely, "GPS + GSM" and "GSM" position finding systems with a higher reliability and a larger range are very expensive still today and then little usable for the mentioned applications.

The drawbacks of "GSM" systems of the state of art, furthermore, are inherent in that those systems do not allow the service to be available to everybody still today, even if they locate the position of people and objects.

In particular, a position finding service directed essentially to the spotting of people only, for example, was supplied by Yahoo for a short time by using a technology made available by Cellpoint but some problems connected to the privacy brought to the interruption of the service.

Another more recent application is Teddyphone, a cellular phone provided with a few buttons for use of children and having the drawbacks of the technique based on GSM (such as for example the poor position finding precision), wherein it proposes to reduce the risks for the health of the children with the result of a detriment of the quality of the service because of the reduction of the signal covering area as a consequence of a signal power reduction.

Therefore, the "GSM" position finding service is at the moment a service that has some difficulty in being spread by the same telephone service providers and police.

A further drawback is given by the incompatibility often existing between the various "GSM" position finding technologies as well as the limited possibility of promoting the use for information service and commercial applications of the electronics independent of the type of mobile phone of the user. Furthermore, likewise to what emphasized for the "GPS" apparatus, the "GSM" apparatus have the same drawbacks connected to size, cost and charge autonomy of the mobile phones.

The drawbacks connected to the technology of the existing wireless systems of the "Wi-Fi" type are correlated with the need of using computers provided with cards for the wireless connection which have overall dimensions, weights, and costs not acceptable for a device which has to be applied to a child, an object or an animal as well as high power consumption because of the need of a frequent cell recharging.

The drawbacks of the existing wireless position finding systems for the spotting of people are well exemplified by the system "Safe Child" produced by Beghelli which does not allow in any way information about the position of the child to be received beyond a limited range and a determined covering area. Furthermore, such system has not been conceived for the position finding of animals and objects too because it would need frequent recharges of the cells of the transmitter which could not easily be used in case of animals. Many suitable position finding systems such as those proposed by Beghelli offer restricted, limited applications today.

Furthermore, the drawbacks of the existing wireless systems such as for example "Quik Trak" system are caused both by the missing application of the latter for the position finding of children and animals and the need of frequencies which cannot be used in many countries of the world and, additionally, it is based upon complex, expensive technologies requiring the use of "GPS" for the fixed stations which need a frequent, expensive maintenance because of the high power consumption.

From EP-A-1282095, US-B2-6674368, US-B1-6693585 and EP-A-0811959, are known systems for autoforming network or systems for finding the position of people, animals or objects.

A first drawback of such known systems consists in that each of the units or devices therein disclosed comprise both a transmitter and a receiver. A second drawback of such known autoforming network systems is that said autoforming is not automatic, but require that each new transceiver has been set into a configuration mode. A third drawback of said known systems is that each unit must contain data concerning its position. A fourth drawback of said known systems is that said plurality of transceiver or tags or units need mutual identification.

The main object of the present invention is to fully overcome the limitations and the drawbacks of the previously disclosed systems by providing an innovative system for the position finding of people, particularly children, animal, and things by a new network of wireless transceivers and transmitters with low power consumption.

A further object of the present invention is at the same time to provide a reliable product of simple, practical use and above all low cost at the reach of everybody, even if it is based upon the wireless technology and creates suitable combinations of known technologies (such as for example GPS, GSM/UMTS, UMTS, RFID).

These objects are accomplished by providing a system 1 for the position finding of people, animals and things 2 which is particularly useful for a precise, instantaneous position finding of the location of people, animals, and things 2 in closed rooms and/or open air as described in the first and following claims enclosed therewith.

These purposes and the consequent advantages as well as the features of the method according to the present invention will be more readily apparent from the following description of some embodiments disclosed thereafter only by way of a not limiting example particularly with reference to the accompanying drawings, in which:

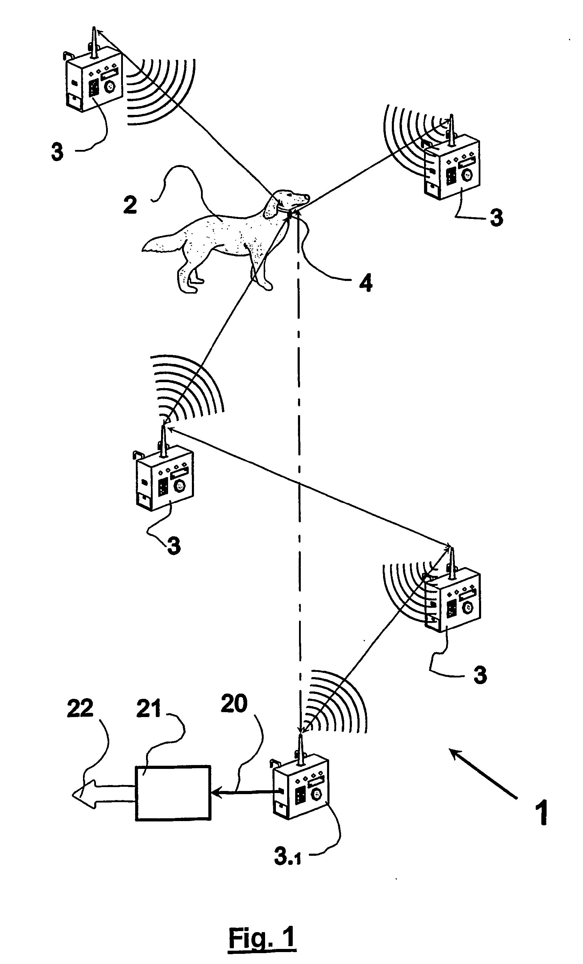

Fig. 1 is an exemplary schematic view of system 1 for the position finding of people, animals, and things 2 of the present invention showing a plurality of transceivers 3, by one 3.1 of which transmitter 4 applied to dog 2 is being located by the interaction via radio with transceivers 3 intercepting directly the signal of transmitter 4;

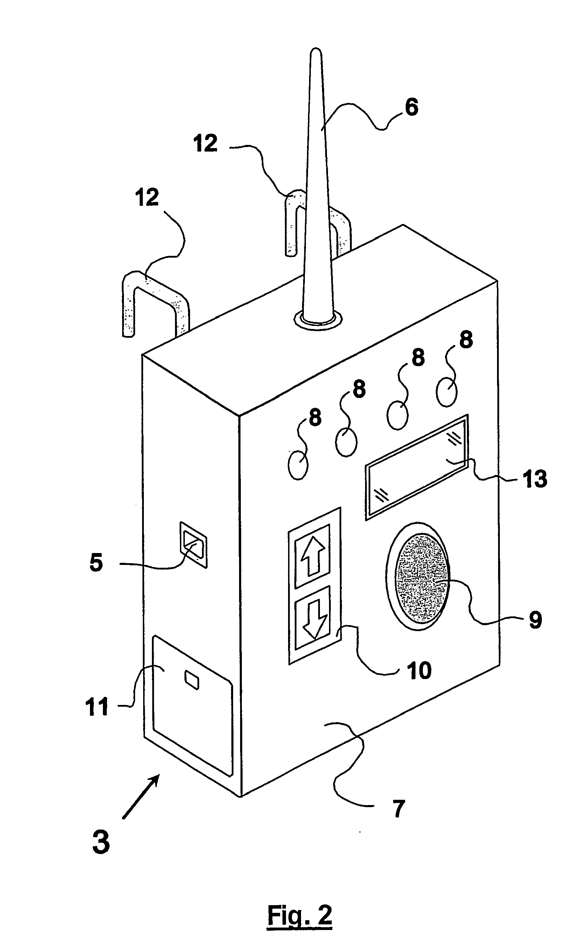

Fig. 2 is a three-dimensional schematic view of a preferred embodiment of transceiver 3 showing its main components;

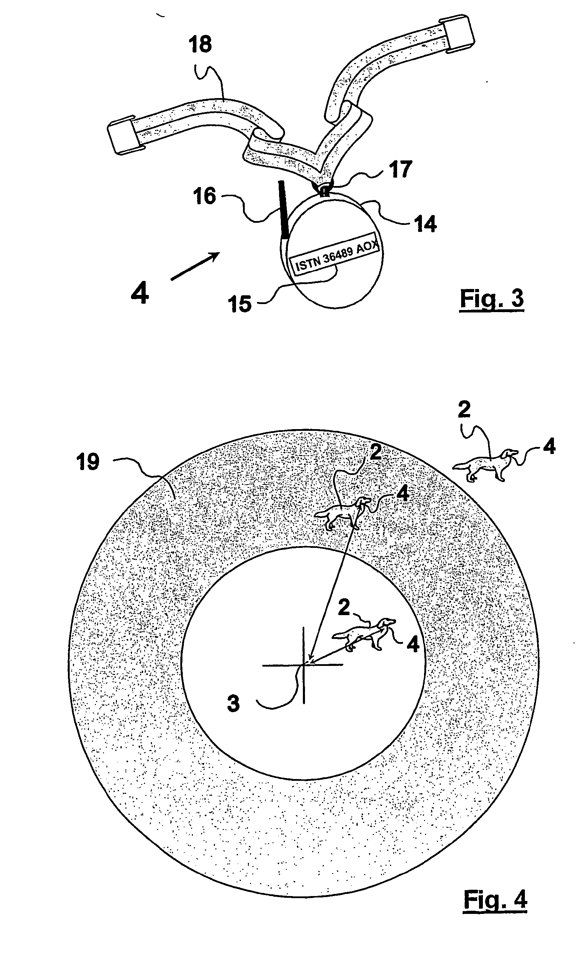

Fig. 3 is a three-dimensional schematic view of a preferred embodiment in which transmitter 4 is applied to dog 2 of fig. 1 like a medal provided with belt 18;
Fig. 4 shows a schematic view of the operation of a traditional system for the position finding of people, animals, and things 2 consisting of only one transceiver 3 having a limited transceiving range of the interception signal of transmitter 4 applied to dog 2 in the example shown, with a maximum value varying within a wide area 19 inside which the location is uncertain and beyond which dog 2 is not interceptable any longer;

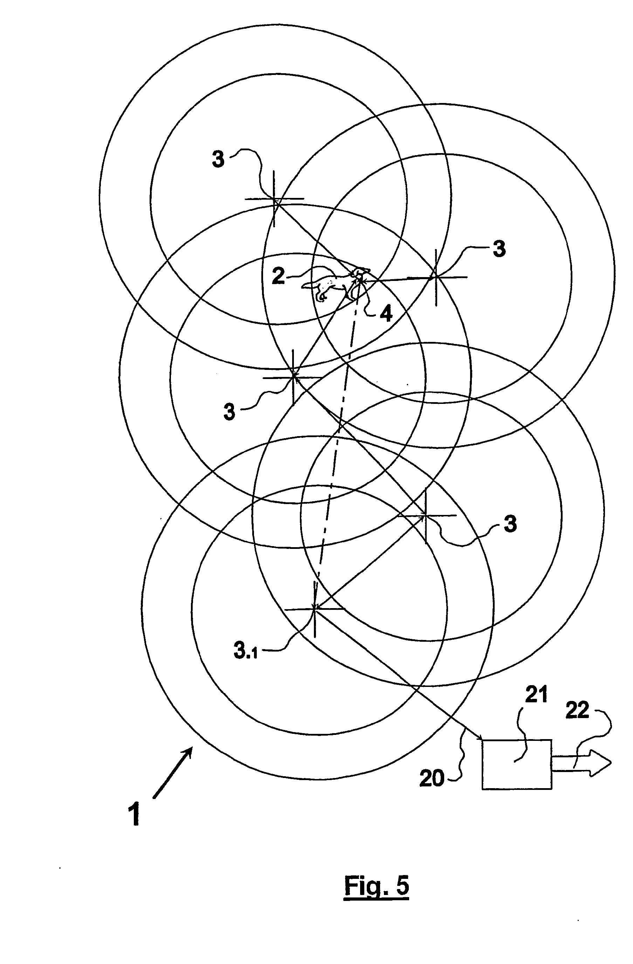

Fig. 5 shows a schematic view of the operation of the innovative system for the position finding of people, animals, and things 2 depicted in fig. 1 and consisting of a plurality of transceivers 3 which, even if their transceiving range of the interception signal of transmitter 4 is limited, allow the signal of transmitter 4 carried by dog 2 to be intercepted through connection on a net by processing the signals received from transceiver 3 even if transmitter 4 is far outside the range of interception of transceiver 3.1 looking for it.

With reference to the annexed figures it is evident that position finding system 1 shown thereby relates to a simple, cheap, effective application of position finding system 1 such as to be used in those environments where the application of "GPS", "GPS + GSM" and "Wi-Fi" systems is totally or partly unsuited or insufficient because of complexity, cost and autonomy of operation or where the existing technology is not able to provide a qualitatively high service, for example, to make information available also via network as it is the case for the system "Safe Child" of Beghelli.

The main feature of the present position finding system 1 as shown in figures 1 and 5 is actually the possibility of exchanging information among the several transceivers 3 with open protocols to support a number of applications (home automation, remote reading, RFID, traffic data, etc.) by using suitable frequencies (bands of 400 MHz, 800 MHz, 2.4 GHz). Transceivers 3 as well as transmitter 4 are provided with hardware and software with low power consumption. Furthermore, transceivers 3 communicate to one another both directly and indirectly via network, for example, by a connection to a predetermined address, thus establishing an "autoforming network", i.e. a network which is created and extended automatically at each new installation of a transceiver 3 and is able to increase the position finding range of each single transceiver 3 so that a generic transceiver 3.1 interconnected via network can start the position finding of the location of the child, thing or animal 2 to be found out, even if the latter is located at a distance which is far greater than the nominal range of transceiver 3.1 as it is possible to set up a communication among a plurality of position finding systems.

By comparing the present position finding system 1 with the state of art shown schematically in figure 4 where transceiver 3 cannot receive the signal of transmitter 4 carried by subject 2 (child, animal, or thing) to be found out beyond a determined range of limited position finding area as well as cannot detect the exact coordinates of the position of subject 2 but only an approximate distance within a circular crown corresponding to the radius and the precision of interception, it is self-evident that the inventive concept is concerned with the expansion of the interception radius of the generic transceiver 3.1 which can be obtained by connecting it via network to such a plurality of transceivers 3 and by processing the information sent by transmitter 4 and collected by such a plurality of transceivers 3 operating like a bridge for the generic transceiver 3.1 connected via network. A further inventive concept is also concerned with the mode of setting up the network which is then "autoforming", i.e. it is created and extended automatically upon each new installation of a transceiver 3 which can be purchased by both private users and companies which invest in the position finding services or in their installation. The network is created without the need of an expensive installation of suitable network facilities, and the transceivers operating as bridges are the same transceiver 3 that also provide individually the interception service in their own covering area and allow a network to be autoformed without the need for the design and/or installation thereof in advance. It is evident that the interception service will be the more reliable and expanded the more transceivers 3 will be installed for individual use.

The present system provides signal routing nets that are designed unlike the installation in a suitable way, i.e. the protocol used will have an automatic signal routing able to provide predetermined paths for a communication from a transceiver to another one specific for that suitable connection which is necessary because a new user (transmitter, but also transceiver) has joined the system.

The inventive concept of the position finding system disclosed is inherent in the information exchange among the several transceivers or base unit 3 which are able to operate as receivers and also as transmitter of information to other transceivers 3. Some transceivers 3, additionally, are also provided with a (fixed or mobile) telephone for the connection to Internet to supply the public telephone service with the information collected. Actually, just because of a dialogue among the several units, the connection of only one transceiver for each service area (cell structure) is enough.

The size of each such cell depends on the topographic, geographic configuration of the territory as well as the average traffic of data, the number of repetitions of information provided by the protocol, the average range of the signal, and the quality of the service ensured.

Thus, the several transceivers 3 are going to set up a network which is far wider with respect to the range of the single transceiver 3 and arranged to be expanded automatically at each new entry of a transceiver 3 by the users into the network.

In the preferred embodiment at least a pair of transceivers 3 is provided initially, both of them being able to exchange information with other base stations via air, and at least one of them being also provided with a socket 5 for PN/modem/LAN (PN stands for Public Network, or PSTN stands for Public Switched Telephonic Network or still PLMTN stands for Public Land Mobile Telephonic Network, i.e. telephonic or not, public networks such as Internet with circuit or packet switching; modem stands for an analogue or SDSL modem or other modems connected to a PN) for the connection to public network 22 as it is inferred from the preferred, not limiting embodiment with accessories shown in figures 1 and 2. The embodiment shown in fig. 2 is preferred but is not provided with the further components such as "GPS + GSM/UMTS", "GSM/UMTS", "BLUE-TOOTH" and infrared modules or other equivalent modules and accessories which it consists of. Transceivers 3 of the latter embodiment have to be necessarily installed at fixed points, for example balconies or terraces of single or condominial houses as well as provided with telephone sockets for the connection to Internet to allow all acquired information to be exchanged via network. To push purchases of the latter embodiment the network service providers usually propose credit facilities to anyone will decide to choose such type of transceiver 3 and to carry out the installation. Instead, the one who won't connect his/her own transceiver 3 to public network 22 can always purchase the standard embodiment without output 5 to public network/modem/LAN. optionally and/or alternatively, a "GPS + GSM/UMTS" module or the like can be put into GPS transceiver 3 so that socket 5 for PN/modem/LAN as well as the fixed location of transceiver 3 is not necessary. Such insertion of GPS + GSM/UMTS module in the transceiver allows the position finding in case of not fixed relay station which is, for example, installed on board of a car or other vehicles, or generally where a transceiver 3 or a plurality of transmitters 4 can be installed.

The socket for PN/modem/LAN is arranged in models connected both directly to telephone system 22 and an outside modem 21 by means of a suitable connection cable 20, and also to a LAN. Should a transceiver 3 with internal modem be provided, a socket for data transmission to modem (for example a standard serial gate RS232) will be provided instead of the telephone socket. In case of connection to a LAN the connecting cable 20 will be of the suitable type.

The one who would like to use only the on-line position finding service for spotting the position of a child, animal or object 2 through the access to the net but he/she wasn't interested in the purchase of transceiver 3, he/she can receive an acoustic alarm through his/her cellular phone if the object or the child or the animal 2 to be found out should move away beyond a certain distance from a predetermined area already covered by other transceivers 3, thus making use in any way of the service even if at a different cost.

Transceiver 3 is provided with a case 7 which can be manufactured with a suitable protection degree (for example IP 54).

Transceiver 3 of a preferred embodiment shown in fig. 2 is mainly provided with an antenna 6 preferably positioned outside case 7 of transceiver 3, a plurality of light emitting diodes or LED 8 with switch 10 for the calibration in the field, a warning horn 9, a battery room 11, and at least a fixed support means 12 of transceiver 3 for wall or balcony.

In a second preferred embodiment, as derived from fig. 2, said transceiver 3 is also provided with a socket 5 for PN/modem/LAN for the connection of transceiver 3 via network, a socket for outside power supply, a keyboard 10 for regulating the acoustic signal intensity, the calibration in the field, and other optional functions, and a display 13 which is a further visual means or replaces said plurality of led 8. The power supply for the transceiver can be taken directly from the socket 5 for PN/modem/LAN.

A third preferred embodiment of the present system is characterized by a kit consisting of a transceiver 3.1 provided with integrated "GPS + GSM/UMTS" module for the solution of the specific problem of the position finding of groups of things/people/animals 2 (or more generally "objects" 2) that can move over geographically wide territories even if they always stay together in a group. In fact, in this case the transceiver is arranged for remote sending, automatically or on request, the information relative to the position as well as, which is more important, relative to how many objects 2 are present in the interception range through public network to a web site or through short message service (SMS) of cellular phones, with the possibility of setting up an alarm function in case of a missing signal from only one monitored object 2. This solution allows a remote position finding service to be set up, even if there is no repeater network in the territory, and is also effective without a GPS signal because it is, however, enough to know that the object 2 has moved away.

The latter application of the present position finding system can be useful to allow elderly people and children upon going on a trip or walking within an area to be spotted, as well as works of art transported from a museum to another for temporary or travelling art exhibitions to be found out, etc.

Transceivers 3.1 have a known position as they are connected to the public network through socket 5 for PN/MODEM/LAN, but generally and when not connected to the public network, the information relative to their position is transmitted via radio or via cable upon installation and stored in memory. Therefore, said transceivers 3.1 are able to communicate their positions in association with an information relative to reliability of their positions. In fact, these positions could be derived from the GPS coordinates in case of transceiver 3.1 with internal GPS+GSM/UMTS option, or fixed by the operator upon fixed installation. In the latter case, transceiver 3 or 3.1 is able to operate by a firmware routine in case the information is little reliable because it:
- checks whether the connection to public network is set up in case of connection to PN/MODEM/LAN;
- compares the position detected by a transceiver 3 with the position detected by other transceivers 3 or 3.1 in case the former is not arranged for the connection to the public network. In case transceiver 3.1 is connected to the public network or provided with GPS module, transceiver 3.1 performs triangulations to spot first its own position with respect to the position of the other repeaters or transceivers 3 and 3.1 in communication therewith, the latter transceivers communicating in turn their own coordinates together with data about their reliability. Generally, the information about the reliability of their position depend also on the fact that transceivers 3 and 3.1 can further be provided with a position sensor.

As far as transceivers 3.1 provided with internal GPS+GSM/UMTS module is concerned, a fourth preferred embodiment equipped with portable container for installation, for example, on board of vehicles can also be proposed. In this case, the power supply is derived from the same vehicle: the battery of the vehicle is the back-up, and a connection cable or a bluetooth module or the like is connected directly to socket or connector 5 for PN/MODEM/LAN. The latter (cable and bluetooth module) allow the connection to:
- an outside device for the collection of data from sensors-actuators of the vehicle;
- GPS navigation system previously installed on board of the same vehicle.

In the latter case transceiver 3 will use a communication format which is compatible with GPS systems or the like (for example "NMEA" or the like) as it is the case in the communication of position data among transceivers or repeaters 3 and 3.1.

In any case the "autoforming" network" takes into consideration transceivers 3 and 3.1 in the same way as transmitters 4 and then takes the bearing of the parameters detected thereby. The protocol among repeaters 3 and 3.1 and transmitters 4 is able to communicate at a speed of 100 km/h such that also a travelling vehicle can be used as mobile transceiver to widen the range of interception of the network of transceivers 3.1. As the protocol is open, i.e. the fields of its frame can also be used for general applications, the repeaters or transceivers 3.1 are allowed to be used for data communication among vehicles. The communication protocol of transceivers 3 and 3.1 is such as to allow, in addition to remote reading of apparatus, home automation, and traffic data, also the reading of RFID transponder of new generation (worldwide standard "EPC" of second generation) in standards UHF and/or 2.4 GHz, or if enabled via firmware (for example in factory, upon installation or afterwards via ratio) it can transmit beacons capable of operating the transponders existing in their range to allow them to be spotted and identified.

Transceiver 3 can be in the form of a OEM card that can be integrated within a common satellite navigator available on the market.

Transmitter 4 according to a preferred embodiment shown schematically in fig. 3 consists of a shock-resistant case 14 with protection degree IP 54 having small size and provided with a serial number of identification 15 of the transmitter included therein as well as an antenna 16 preferably outside case 14 and of flexible type to keep size and weakness to a minimum.

Transmitters 4 or devices to be positioned on objects 2 to be found out could also be used as receivers having hardware and firmware similar to those of transceivers 3 and 3.1, in particular in other preferred applications as follows:
- where it is desired to change the parameters of the transmitter, for example the transmission frequency of the signal;
- where it is desired to exchange communications not only in position finding mode but also in identification mode compatible with the worldwide standards EPC of second generation, versions UHF and/or 2.4 GHz or still in beacon receiving mode if enabled via firmware.

As the protocol is open, i.e. the fields of its frame can also be used for general applications, transmitters 4 can optionally be provided also with internal sensors (for sensing atmospheric pressure, temperature, humidity, etc.) to allow data detected by the same sensors to be transmitted together with data of its identification and position.

Case 14 is also provided with hook means 17 for securing a belt, collar, necklace or any other means 18 to make transmitter 3 integral with child, animal or moving object 2 to be found out in time.

Position finding system 1 is also characterized by the high autonomy of operation of the batteries as they allow a minimum range of 3-4 years for the transmitter and 4-5 years for the transceiver so that the replacement of such batteries is occasional.

According to a preferred embodiment, "AAA" thionyl lithium chloride cells of 3.6 V for transmitter 4 and "C" cells for transceiver 3 are used.

The minimisation of the power consumption in the transceiving steps is ensured by an accurate selection of the components of the FW routine architecture, interval optimisation, signal transmission mode, and communication protocol. These higher levels of autonomy are an important result that cannot be compared with the average consumption of the "GSM/UMTS", "GPS + GSM/UMTS" or "Wi-Fi" integrated systems of the state of art which require a by far more frequent recharge of the cells.

The minimisation of the transmitted power by transmitter 4 which has a peak of 25 thousandth Watt as a maximum and is lower than one thousandth Watt on average, has the advantage that transmitter 4 may be secured continuously to subjects particularly sensitive to electromagnetic pollution such as children, thus minimising the risks.

The disclosed position finding system 1 can easily be adapted to a number of applications owing to said open protocol compatible with the standard for the supply of further services (for example remote reading of meters, home automation, traffic data, etc.).

To widen the range of the services, position finding system 1 can in any case be coupled with "GPS + GSM/UMTS", "GSM/UMTS", "BLUETOOTH" and infrared modules or the like.

The invention is also characterized by a high quality, reliability, easiness of operation, high autonomy of operation, small size, low cost, ecological compatibility, and crossed exchange of information among the single units and the network.

A product including all these features concurrently is hard to design and actually there is no other position finding system characterized by the above-mentioned performance today.

The design of the preferred embodiments of the invention has required to cope with complex technical, scientific problems solved by a suitable selection of the individual SMD components on cards with small size and a suitable design of FW and particularly a communication protocol such as to fulfil the expected performance such as the signal transmission mode, range, data updating frequency and so on.

Position finding system 1 of the present invention makes use of low-power technology for the chips of transmitter 4 and transceivers 3 and is characterized by low cost because of the simplicity of the adopted technology, and the open protocol allows the range of the possible applications to be widened as well as GPS + GSM/UMTS", "GSM/UMTS", "BLUETOOTH" and infrared modules or the like to be coupled. Particularly if transmitter 4 and transceiver 3.1 use a GPS module in low-power mode coupled with an internal wireless SRD module, they can make use of their internal memory to store their positions and, in case of transceivers 3.1, the memory of other transmitters 4 in all time intervals in which they could not be previously spotted by transceivers 3, 3.1 so that said positions can be thereafter transmitted via radio. Said coupling has the advantage of receiving information also from not fixed transceivers 3.1 and transmitters 4, for example on board of vehicles.

The novel position finding system 1 achieves remarkable improvements and optimisations. Particularly it has the advantage of a very low likelihood of obsolescence as system 1 allows the individual components to be strengthened and replaced in time as well as further modules to be added for the product to be adapted to the future requirements (home automation, remote reading of counters, etc.) without the need of replacing transmitter 4.

It should be appreciated that the advantages of the present invention consist above all of having conceived a position finding system 1 which is flexible, scalable, of simple manufacturing, of easy technical feasibility, and with a minimized final cost.

A further advantage of position finding system 1 consists of the theoretically unlimited increase of the interception range of transmitters 4 because a controlling system able to transmit at any moment the position of the object to be found out with high precision is connected to the net.

Another advantage of the present invention is to have conceived a position finding system 1 having components with low power consumption, thus allowing a long range autonomy of operation of the batteries.

It is self-evident that a number of modifications, adaptations, integrations, variations and replacements of elements with other functionally equivalent elements can be made in the embodiment of the position finding system previously described by way of an illustrative, not limiting example without departing from the scope of the following claims.

## Claims

1. A position finding system (1) for people, animals, and things, or objects (2), which is particularly useful for the precise, present position finding of said "objects" (2) in closed rooms and/or open air, consisting of a plurality of wireless or wireless Short Range Devices (SRD) transceivers (3, 3.1), wherein each object (2) to be spotted is provided only with a transmitter (4) and not with a receiver, and wherein both said transceivers (3, 3.1) and said transmitter (4) are provided with hardware including at least one microcomputer, a radio set, an internal reprogrammable memory, and a low-power control and communication software (protocols), said transceivers (3, 3.1) and said transmitter (4) communicating among one another both directly through wireless network and indirectly through the telephone service network to provide an autoforming network able to be generated and extended automatically upon a new installation of a transceiver (3, 3.1), said new installation expanding the spotting distance of each single transceiver (3, 3.1) so that a generic transceiver (3, 3.1) can carry out a precise, optimum finding of the location of the transmitter (4) connected to each object (2) to be found out, even if the latter is located at a distance which is by far greater than the nominal range of transceiver (3, 3.1), both a remote multiple repetition of the signal containing the information of the position calculated by a measurement of power and/or delay of the signal and a processing of the information about the position of a transmitter (4) collected by said plurality of transceivers (3, 3.1) being also possible via network; wherein at least one of said transceivers (3, 3.1) has the information about its own position stored in memory.

2. Position finding system (1) according to claim 1, **characterized in that** said wireless SRD or simply wireless feature of transceivers (3, 3.1) is intended as the use of frequency, modulation, and power such as to allow the ratio among the distances of propagation of the transmitted signals and the power consumed to be optimised as well as the use by the greatest number of countries.

3. The position finding system (1) according to the preceding claims, **characterized in that** said low-power feature is intended as the use of hardware circuits and components with low power consumption and firmware/software routine that are strictly parameterised and reprogrammable by the user or the service provider of system (1), thus allowing said components and circuits to be operated only for the strictly needed time for the execution of the functions required by the system or the user.

4. The position finding system (1) according to the preceding claims, **characterized in that** said transceiver (3) is provided with a case (7) manufactured with a suitable protection degree, an antenna (6) preferably positioned outside the case (7) of transceiver (3), a plurality of photodiodes or led (8) with a switch or buttons (10) for the calibration in the field, an electroacoustic transducer (9), a battery space (11) and at least a fixed support means (12) of transceiver (3) to be installed on the wall or in a balcony.

5. The position finding system (1) according to the preceding claims, **characterized in that** said transceiver (3) has the information about its position stored in memory, said information being transferred via radio or via cable upon installation.

6. The position finding system (1) according to the preceding claims, **characterized in that** said transceiver (3.1) is further provided with a socket (5) for PN/modem/LAN for its connection on a network, a socket for external power supply, a keyboard in replacement of buttons (10) to regulate the acoustic intensity of the signal, the calibration in the field and other optional function, as well as a display (13) in replacement of said plurality of led (8) or as further visual support.

7. The position finding system (1) according to the preceding claims, **characterized in that** said external power supply of the transceiver is derived directly from the socket (5) for PN/modem/LAN.

8. The position finding system (1) according to the preceding claims, **characterized in that** said transceiver (3.1) includes a GPS+GSM/UMTS integrated module which is useful in case the connection to PN/modem/LAN is missing and particularly useful for the solution of the specific problem of position finding of groups of objects (2) that can move over geographically very wide territories, still remaining in the group.

9. The position finding system (1) according to the preceding claims, **characterized in that** said transceiver (3.1) is arranged for the remote transmission of the information relative to its position as well as, which is more important, relative to how many objects (2) are present in its range of interception automatically or on request through public network to a web site or through a short message service of the cellular telephony, with the possibility of setting up an alarm function in case of signal loss from only one monitored object (2) so that a remote position finding service is provided even if a network of territorial repeaters is missing and is also able to operate without GPS signal, however being enough the information that an object (2) is moving away.

10. The position finding system (1) according to the preceding claims, **characterized in that** said transceiver (3.1) holds an information relative to its position in its memory, said information being transferred via radio or cable upon any installation, said transceiver (3.1) being able to communicate, in addition to its position, also an information relative to the reliability of said position when said transceiver further provided with a position sensor has been previously disconnected from the public network by detaching the socket (5) for PN/MODEM/LAN and/or displaced from its initial position.

11. The position finding system (1) according to the preceding claims, **characterized in that** transceiver (3, 3.1) is able to communicate the reliability of the transmitted information relative to its position by a firmware routine and compares its position preset upon installation with the position detected by other transceivers (3 or 3.1).

12. The position finding system (1) according to the preceding claims, **characterized in that** said transceiver (3.1) is provided with a case (7) with reduced size in the same way as a cellular phone such as to be easily portable.

13. The position finding system (1) according to claim **characterized in that** said transceiver (3.1) provided with portable case (7) can be installed inside vehicles, the internal battery (11) of said vehicles being also used as back-up power supply.

14. The position finding system (1) according to claims 12 and 13, **characterized in that** said transceiver (3.1) is optionally provided with a bluetooth module or the like inserted inside or placed outside transceiver (3.1) and connected to socket (5) of the latter.

15. The position finding system (1) according to claims 12, 13 and 14, **characterized in that** said bluetooth module serves to the connection to an external device collecting data from the sensor-actuators of the vehicle and GPS navigation system of the same which receives the position of a transmitter (4) found out by the wireless net of transceiver (3, 3.1) from transceiver (3.1) by using a data format of its' protocol which is compatible with GPS systems or the like (for example "NMEA" or the like) relative to the data of position.

16. The position finding system (1) according to claims 12 and 13, **characterized in that** said transceiver (3.1) is optionally provided with a communication cable to be connected directly to socket (5) for the connection of an external device having the function of collecting data from the sensors-actuators of the vehicle as well as of the GPS navigation system of the same vehicle which receives the position of a transmitter (4) found out by the wireless net of transceiver (3, 3.1) from transceiver (3.1) by using a communication format of its protocol which is compatible with GPS systems or the like (for example "NMEA" or the like) relative to the data of position.

17. The position finding system (1) according to the preceding claims, **characterized in that** said autoforming network takes into consideration transceivers (3, 3.1) in the same way as transmitters (4) and then locates them and detect their parameters.

18. The position finding system (1) according to the preceding claims, **characterized in that** said communication software or protocols among repeaters (3 and 3.1) and transmitters (4) communicate at relative speed over 100 km/h so that also a moving vehicle can be used as mobile support for a transceiver to expand the range of interception of the net of transceiver (3, 3.1).

19. The position finding system (1) according to the preceding claims, **characterized in that** said protocol is open, i.e. the fields of the frame can be used for general applications and is also able to perform the communication with apparatus for remote reading, home automation, detection of traffic data, RFID transponder of new generation (worldwide EPC standard of second generation) in UHF and/or 2.4 GHz versions, or, if enabled via firmware in factory, upon installation or thereafter via radio, the transmission of beacons capable of operating the transponder existing in the range to allow spotting and identification.

20. The position finding system (1) according to the preceding claims, **characterized in that** said transceiver (3, 3.1) can be manufactured in the form and size of an OEM card able to be integrated within a satellite navigator already available on the market.

21. The position finding system (1) according to the preceding claims, **characterized in that** said transmitter (4) is enclosed in a shock-resistant case (14) with a suitable protection degree, small size, and having externally a serial number (15) of identification of the transmitter contained therein, and provided with a flexible antenna (16) outside the case (14), said case (14) being also provided with hook means (17) for securing a belt, collar, necklace or any other member (18) to make transmitter (4) integral with object (2).

22. The position finding system (1) according to the preceding claims, **characterized in that** said transmitters (4) can be manufactured in the shape and the size of an OEM card which can be integrated.

23. The position finding system (1) according to the preceding claims, **characterized in that** said transmitters (4) are used as receivers provided with hardware and firmware similar to those of transceivers (3, 3.1) upon regulation of the transmitter's parameters such as frequency of transmission of the signal or still where communications are exchanged not only in position finding mode but also in identification mode so as to be compatible with the worldwide EPC standard of second generation in versions UHF and/or 2.4 GHz or still, if enabled via firmware, to receive beacons or to transmit in a synchronized way.

24. The position finding system (1) according to the preceding claims, **characterized in that** transmitters (4) are provided with internal sensors (for detecting atmospheric pressure, temperature, humidity, etc.) to allow the transmission of data detected by the sensors in addition to those relative to its identification and position.

25. The position finding system (1) according to the preceding claims, **characterized in that** said transmitter (4) and transceivers (3, 3.1) in transmitting mode use their internal memory to store their positions when they use a GPS module always operated in LOW-POWER mode in association with an internal wireless SRD module, and use in transceiver (3.1) mode the positions of other transmitters (4) in all time intervals in which they were not previously detectable by transceiver (3, 3.1) to transmit them thereafter via radio connection.

## Patentansprüche

1. Positionsbestimmungssystem (1) für Menschen, Tiere und Dinge oder Objekte (2), das insbesondere für die präzise, aktuelle Positionsbestimmung der "Objekte" (2) in geschlossenen Räumen und/oder im Freien nützlich ist und aus mehreren drahtlosen Sendeempfängern (3, 3.1) oder drahtlosen Kurzbereichs-Sendeempfängern (SRD-Sendeempfängern) (3, 3.1) besteht, wobei jedes zu ortende Objekt (2) lediglich mit einem Sender (4) und mit keinem Empfänger versehen ist, und wobei sowohl die Sendeempfänger (3, 3.1) als auch der Sender (4) mit Hardware einschließlich mindestens einem Mikrocomputer, einer Funkeinrichtung, einem internen wiederprogrammierbaren Speicher und einer leistungsarmen Steuer- und Kommunikationssoftware (Protokollen) versehen sind, wobei die Sendeempfänger (3, 3.1) und der Sender (4) untereinander sowohl direkt über Drahtlosnetz als auch indirekt über Fernsprechnetz kommunizieren, um ein selbstformendes Netz bereitzustellen, das bei einer neuen Installation eines Sendeempfängers (3, 3.1) automatisch generiert und erweitert werden kann, wobei die neue Installation die Ortungsdistanz jedes einzelnen Sendeempfängers (3, 3.1) erweitert, so dass ein generischer Sendeempfänger (3, 3.1) eine präzise, optimale Bestimmung des Orts jedes mit einem zu ortenden Objekt (2) verbundenen Senders (4) vornehmen kann, selbst wenn sich das letztere in einem Abstand befindet, der bei weitem größer als die Nennreichweite des Sendeempfängers (3, 3.1) ist, wobei sowohl eine entfernte mehrfache Wiederholung des Signals, das die Informationen über die Position enthält, welche über eine Messung von Leistung und/oder Verzögerung des Signals berechnet wurde, als auch eine Verarbeitung der Informationen über die Position eines Senders (4), die von den mehreren Sendeempfängern (3, 3.1) gesammelt werden, auch über Netz möglich sind; wobei im Speicher mindestens eines der Sendeempfänger (3, 3.1) Informationen über seine eigene Position abgelegt sind.

2. Positionsbestimmungssystem (1) nach Anspruch 1, **dadurch gekennzeichnet, dass** die drahtlose SRD-Funktion oder einfach die drahtlose Funktion der Sendeempfänger (3, 3.1) die Verwendung von Frequenz, Modulation und Leistung dergestalt vorsieht, dass das Verhältnis zwischen Fortpflanzungsdistanzen der gesendeten Signale und Leistungsaufnahme optimiert werden kann und die Verwendung in der größtmöglichen Anzahl von Ländern möglich ist.

3. Positionsbestimmungssystem (1) nach einem der vorhergehenden Ansprüche, **dadurch gekennzeichnet, dass** das Merkmal der Leistungsarmut die Verwendung von Hardware-Schaltungen und -Komponenten mit niedriger Leistungsaufnahme und von Firmware-/Software-Routinen vorsieht, die streng parametrisiert sind und vom Benutzer oder Service-Provider des Systems (1) umprogrammiert werden können, so dass die Komponenten und Schaltungen nur für die zur Ausführung der vom System oder vom Benutzer benötigten Funktionen streng benötigte Zeit betrieben werden können.

4. Positionsbestimmungssystem (1) nach einem der vorhergehenden Ansprüche, **dadurch gekennzeichnet, dass** der Sendeempfänger (3) mit Folgendem versehen ist: einem Gehäuse (7), das in einer geeigneten Schutzart hergestellt ist, einer Antenne (6), die bevorzugt außerhalb des Gehäuses (7) des Sendeempfängers (3) positioniert ist, mehreren Fotodioden oder Leuchtdioden (8) mit einem Schalter oder Tasten (10) für die Kalibrierung im Feld, einem elektroakustischen Wandler (9), einem Batteriefach (11) und mindestens einem festen Halterungsmittel (12) für die Installation des Sendeempfängers (3) an der Wand oder auf einem Balkon.

5. Positionsbestimmungssystem (1) nach einem der vorhergehenden Ansprüche, **dadurch gekennzeichnet, dass** in dem Speicher des Sendeempfängers (3) die Informationen über seine Position abgelegt sind, welche bei der Installation über Funk oder Kabel transferiert werden.

6. Positionsbestimmungssystem (1) nach einem der vorhergehenden Ansprüche, **dadurch gekennzeichnet, dass** der Sendeempfänger (3.1) ferner mit Folgendem versehen ist: einer Anschlussbuchse (5) für öffentliches Netz/Modem/LAN, die zum Anschluss an ein Netz dient, einer Buchse für eine externe Stromversorgung, einer Tastatur als Ersatz für Tasten (10) zum Regeln der akustischen Intensität des Signals, der Kalibrierung im Feld und weiterer optionaler Funktionen sowie einem Display (13) als Ersatz für die mehreren Leuchtdioden (8) oder als zusätzliche visuelle Unterstützung.

7. Positionsbestimmungssystem (1) nach einem der vorhergehenden Ansprüche, **dadurch gekennzeichnet, dass** die externe Stromversorgung des Sendeempfängers direkt aus der Anschlussbuchse (5) für öffentliches Netz/Modem/LAN abgeleitet wird.

8. Positionsbestimmungssystem (1) nach einem der vorhergehenden Ansprüche, **dadurch gekennzeichnet, dass** der Sendeempfänger (3.1) ein integriertes GPS+GSM/UMTS-Modul aufweist, welches nützlich ist, falls die Verbindung mit öffentlichem Netz/Modem/LAN fehlt, und besonders nützlich ist, um das spezielle Problem der Positionsbestimmung von Gruppen von Objekten (2), die sich über geographisch ausladende Gebiete bewegen und dabei dennoch in der Gruppe verbleiben, zu lösen.

9. Positionsbestimmungssystem (1) nach einem der vorhergehenden Ansprüche, **dadurch gekennzeichnet, dass** der Sendeempfänger (3.1) für die Fernübertragung der Informationen bezüglich seiner Position sowie, was wichtiger ist, bezüglich der Anzahl der Objekte (2) innerhalb seiner Abfangreichweite ausgelegt ist, die automatisch oder auf eine über öffentliches Netzwerk an eine Website gerichtete oder über einen Kurznachrichtendienst (SMS-Dienst) der Zellenfunktelefonie Anfrage hin ausgelöst werden kann, wobei die Möglichkeit besteht, für den Fall des Signalverlusts von lediglich einem überwachten Objekt (2) eine Alarmfunktion einzurichten, so dass ein Fernpositionsbestimmungsdienst selbst dann bereitgestellt wird, wenn kein Netz aus territorialen Repeatern vorhanden ist, und der Dienst ohne GPS-Signal arbeiten kann, aber die Information ausreicht, dass sich ein Objekt (2) wegbewegt.

10. Positionsbestimmungssystem (1) nach einem der vorhergehenden Ansprüche, **dadurch gekennzeichnet, dass** der Sendeempfänger (3.1) eine Information bezüglich seiner Position in seinem Speicher hält, wobei die Information bei jeder Installation über Funk oder Kabel transferiert wird, wobei der Sendeempfänger (3.1) in der Lage ist, neben seiner Position auch eine Information bezüglich der Zuverlässigkeit der Position zu kommunizieren, wenn der ferner mit einem Positionsgeber versehene Sendeempfänger zuvor durch Trennen der Anschlussbuche (5) für öffentliches Netz/Modem/LAN von dem öffentlichen Netz getrennt worden und/oder aus seiner ursprünglichen Position verschoben worden ist.

11. Positionsbestimmungssystem (1) nach einem der vorhergehenden Ansprüche, **dadurch gekennzeichnet, dass** der Sendeempfänger (3, 3.1) in der Lage ist, die Zuverlässigkeit der gesendeten Informationen bezüglich seiner Position über eine Firmware-Routine zu kommunizieren und seine bei der Installation voreingestellte Position mit der von anderen Sendeempfängern (3 oder 3.1) erfassten Position vergleicht.

12. Positionsbestimmungssystem (1) nach einem der vorhergehenden Ansprüche, **dadurch gekennzeichnet, dass** der Sendeempfänger (3.1) auf dieselbe Weise wie ein Mobiltelefon mit einem Gehäuse (7) mit verringerter Größe versehen ist, um leicht tragbar zu sein.

13. Positionsbestimmungssystem (1) nach Anspruch 12, **dadurch gekennzeichnet, dass** der mit einem tragbaren Gehäuse (7) versehene Sendeempfänger (3.1) in Fahrzeugen installiert werden kann, wobei die interne Batterie (11) der Fahrzeuge auch als Reservestromversorgung benutzt wird.

14. Positionsbestimmungssystem (1) nach Anspruch 12 oder 13, **dadurch gekennzeichnet, dass** der Sendeempfänger (3.1) optional mit einem Bluetooth-Modul oder dergleichen versehen ist, das in den Sendeempfänger (3.1) eingebaut oder außerhalb platziert und mit einer Anschlussbuchse (5) desselben verbunden ist.

15. Positionsbestimmungssystem (1) nach Anspruch 12, 13 oder 14, **dadurch gekennzeichnet, dass** das Bluetooth-Modul zur Verbindung mit einer externen Einrichtung dient, die Daten von den Sensoren/Stellgliedern des Fahrzeugs und von dem GPS-Navigationssystem desselben sammelt, welches unter Verwendung eines Datenformats seines Protokolls, das bezüglich der Positionsdaten kompatibel mit GPS-Systemen oder dergleichen (z.B. "NMEA" oder dergleichen) ist, von dem Sendeempfänger (3.1) die von dem drahtlosen Netz aus Sendeempfängern (3, 3.1) bestimmte Position eines Senders (4) empfängt.

16. Positionsbestimmungssystem (1) nach Anspruch 12 oder 13, **dadurch gekennzeichnet, dass** der Sendeempfänger (3.1) optional mit einem Kommunikationskabel versehen ist, das zur Verbindung mit einer externen Einrichtung direkt an die Anschlussbuchse (5) angeschlossen wird, wobei die externe Einrichtung die Funktion des Sammelns von Daten von den Sensoren/Stellgliedern des Fahrzeugs und von dem GPS-Navigationssystem desselben Fahrzeuges aufweist, welches unter Verwendung eines Kommunikationsformats seines Protokolls, das bezüglich der Positionsdaten kompatibel mit GPS-Systemen oder dergleichen (z.B. "NMEA" oder dergleichen) ist, von dem Sendeempfänger (3.1) die von dem drahtlosen Netz aus Sendeempfängern (3, 3.1) bestimmte Position eines Senders (4) empfängt.

17. Positionsbestimmungssystem (1) nach einem der vorhergehenden Ansprüche, **dadurch gekennzeichnet, dass** das selbstformende Netz Sendeempfänger (3, 3.1) auf dieselbe Weise wie Sender (4) berücksichtigt und sie daraufhin ortet und ihre Parameter erfasst.

18. Positionsbestimmungssystem (1) nach einem der vorhergehenden Ansprüche, **dadurch gekennzeichnet, dass** die Kommunikationssoftware oder -protokolle zwischen den Repeatern (3 und 3.1) und Sendern (4) bei relativen Geschwindigkeiten über 100 km/h kommunizieren, so dass auch ein fahrendes Fahrzeug als mobile Basis für einen Sendeempfänger benutzt werden kann, um die Abfangreichweite des Netzes aus Sendeempfängern (3, 3.1) auszudehnen.

19. Positionsbestimmungssystem (1) nach einem der vorhergehenden Ansprüche, **dadurch gekennzeichnet, dass** das Protokoll offen ist, d.h., dass die Felder des Frames für allgemeine Anwendungen benutzt werden können, und es auch mit Vorrichtungen für Fernablesung, Gebäudeautomation, Erkennung von Verkehrsdaten, RFID-Transpondern der neuesten Generation (weltweiter EPC-Standard der zweiten Generation) in UHF- und/oder 2,4-GHz-Ausführung kommunizieren kann oder, falls dies werkseitig in der Firmware, bei der Installation oder später per Funk aktiviert wurde, Baken übertragen kann, die den in Reichweite befindlichen Transponder betreiben können, um die Ortung und Identifizierung zu ermöglichen.

20. Positionsbestimmungssystem (1) nach einem der vorhergehenden Ansprüche, **dadurch gekennzeichnet, dass** der Sendeempfänger (3, 3.1) in Form und Größe einer OEM-Karte hergestellt werden kann, die in Satellitennavigatoren integriert werden kann, die bereits am Markt verfügbar sind.

21. Positionsbestimmungssystem (1) nach einem der vorhergehenden Ansprüche, **dadurch gekennzeichnet, dass** der Sendeempfänger (4) in ein stoßfestes Gehäuse (14) eingebaut ist, das eine geeignete Schutzart aufweist, von kleiner Größe ist und außen eine Seriennummer (15) zur Identifizierung des darin enthaltenen Sendeempfängers aufweist, und außerhalb des Gehäuses (14) mit einer flexiblen Antenne (16) versehen ist, wobei das Gehäuse (14) außerdem mit Hakenmitten (17) zum Befestigen eines Gurts, Halsbands, Kragens oder einer Halskette oder eines beliebigen anderen Elements (18) versehen ist, um den Sender (4) in das Objekt (2) zu integrieren.

22. Positionsbestimmungssystem (1) nach einem der vorhergehenden Ansprüche, **dadurch gekennzeichnet, dass** der Sender (4) in Form und Größe einer OEM-Karte hergestellt werden kann, die sich integrieren lässt.

23. Positionsbestimmungssystem (1) nach einem der vorhergehenden Ansprüche, **dadurch gekennzeichnet, dass** die Sender (4) als Empfänger benutzt werden, die mit Hardware und Firmware ähnlich der der Sendeempfänger (3, 3.1) versehen sind, wenn die Parameter des Senders wie Sendefrequenz des Signals geregelt werden, oder auch wenn Kommunikation nicht nur im Positionsbestimmungsmodus erfolgt, sondern auch im Identifizierungsmodus, um Kompatibilität mit dem weltweiten EPC-Standard der zweiten Generation in UHF- und/oder 2,4-GHz-Ausführung herzustellen, oder auch, wenn dies in der Firmware aktiviert wurde, um Baken zu empfangen, oder um auf synchronisierte Weise zu senden.

24. Positionsbestimmungssystem (1) nach einem der vorhergehenden Ansprüche, **dadurch gekennzeichnet, dass** Sender (4) mit internen Sensoren (zum Erfassen von Luftdruck, Temperatur, Feuchtigkeit usw.) versehen sind, um das Senden der von den Sensoren erfassten Daten zusätzlich zu den Daten bezüglich Identifizierung und Position des Senders zu ermöglichen.

25. Positionsbestimmungssystem (1) nach einem der vorhergehenden Ansprüche, **dadurch gekennzeichnet, dass** die Sender (4) und Empfänger (3, 3.1) im Sendemodus ihren internen Speicher benutzen, um ihre Positionen darin abzulegen, wenn sie ein GPS-Modul, das immer im leistungsarmen Modus betrieben wird, gemeinsam mit einem internen drahtlosen SRD-Modul benutzen, und im Sendeempfänger-(3.1)-Modus die Positionen anderer Sender (4) in allen Zeitintervallen, in denen diese zuvor nicht durch die Sendeempfänger (3, 3.1) erfassbar waren, nutzen, um sie anschließend per Funkverbindung zu senden.

## Revendications

1. Système de repérage de position (1) pour des personnes, des animaux, et des choses, ou objets (2), qui est particulièrement utile pour le repérage précis de la position instantannée desdits "objets" (2) à l'intérieur et/ou en plein air, se composant d'une pluralité d'émetteurs-récepteurs sans fil ou de type Dispositif à Courte Portée (SRD) (3, 3.1), dans lequel chaque objet (2) à repérer est équipé seulement d'un émetteur (4) et non d'un récepteur, et dans lequel à la fois les émetteurs-récepteurs (3, 3.1) et ledit émetteur (4) sont équipés avec des appareils comprenant au moins un micro-ordinateur, et équipés d'un poste de radio, d'une mémoire interne reprogrammable, et d'un logiciel de commande de faible puissance et de communication (protocoles), lesdits émetteurs-récepteurs (3, 3.1) et ledit émetteur (4) communiquant entre eux à la fois directement par le réseau sans fil et indirectement par le réseau de service téléphonique pour former un réseau à constitution automatique pouvant être généré et étendu automatiquement au moment d'une nouvelle installation d'un émetteur-récepteur (3, 3.1), ladite nouvelle installation augmentant la distance de repérage de chaque émetteur-récepteur unique (3, 3.1) de sorte qu'un émetteur-récepteur générique (3, 3.1) puisse effectuer un repérage précis et optimal de la position de l'émetteur (4) connecté à chaque objet (2) à retrouver, même si ce dernier est situé à une distance qui est largement supérieure à la portée nominale de l'émetteur-récepteur (3, 3.1), à la fois une répétition multiple à distance du signal contenant les informations concernant la position calculée par une mesure de puissance et/ou de retard du signal et un traitement des informations concernant la position d'un émetteur (4) reçue par ladite pluralité d'émetteurs-récepteurs (3, 3.1) étant également possibles par l'intermédiaire du réseau ; dans lequel au moins un desdits émetteurs-récepteurs (3, 3.1) possède les informations concernant sa propre position enregistrées dans la mémoire.

2. Système de repérage (1) selon la revendication 1, **caractérisé en ce que** ladite caractéristique sans fil type SRD ou simplement sans fil des émetteurs-récepteurs (3, 3.1) doit être entendue comme l'utilisation de fréquences, modulations et puissances prévues pour optimiser le rapport entre les distances de propagation des signaux transmis et la puissance consommée, ainsi que l'utilisation par le plus grand nombre de pays.

3. Système de repérage (1) selon l'une quelconque des revendications précédentes, **caractérisé en ce que** ladite caractéristique de faible puissance doit être comprise comme l'utilisation de circuits et de composants de matériel avec une faible consommation d'énergie et de sous-programmes de micrologiciel/logiciel qui sont strictement paramétrables et reprogrammables par l'utilisateur ou le fournisseur de service du système (1), permettant de ce fait de faire fonctionner lesdits circuits et composants seulement pendant la période strictement nécessaire pour l'exécution des fonctions requises par le système ou l'utilisateur.

4. Système de repérage (1) selon l'une quelconque des revendications précédentes, **caractérisé en ce que** ledit émetteur-récepteur (3) est équipé d'un boîtier (7) construit avec une protection appropriée, d'une antenne (6) de préférence placée en dehors du boîtier (7) de l'émetteur-récepteur (3), d'une pluralité de photodiodes ou de diodes électroluminescentes (DEL) (8) avec un commutateur ou des boutons (10) pour l'étalonnage sur le terrain, d'un transducteur électroacoustique (9), d'un logement pour batterie (11) et d'au moins un moyen support de fixation (12) de l'émetteur-récepteur (3) à monter contre un mur ou sur un balcon.

5. Système de repérage (1) selon l'une quelconque des revendications précédentes, **caractérisé en ce que** ledit émetteur-récepteur (3) possède les informations concernant sa position enregistrées dans la mémoire, ladite information étant transférée par radio ou par câble lors de l'installation.

6. Système de repérage (1) selon l'une quelconque des revendications précédentes, **caractérisé en ce que** ledit émetteur-récepteur (3.1) est en outre équipé d'une prise femelle (5) type PN/modem/LAN pour sa connexion à un réseau, d'une prise pour alimentation électrique externe, d'un clavier à la place des boutons (10) pour régler l'intensité acoustique du signal, l'étalonnage sur le terrain et toute autre fonction facultative, ainsi qu'un écran (13) à la place de ladite pluralité de diodes électroluminescentes (8) ou comme support visuel supplémentaire.

7. Système de repérage (1) selon l'une quelconque des revendications précédentes, **caractérisé en ce que** ladite alimentation électrique externe de l'émetteur-récepteur est dérivée directement depuis la prise femelle (5) type PN/modem/LAN.

8. Système de repérage (1) selon l'une quelconque des revendications précédentes, **caractérisé en ce que** ledit émetteur-récepteur (3.1) comporte un module intégré GPS+GSM/UMTS qui est utile dans le cas où la connexion à un PN/modem/LAN serait manquante et particulièrement utile pour la solution du problème spécifique de repérage de groupes d'objets (2) qui peuvent se déplacer sur des territoires géographiquement très étendus, tout en restant dans le groupe.

9. Système de repérage (1) selon l'une quelconque des revendications précédentes, **caractérisé en ce que** ledit émetteur-récepteur (3.1) est prévu pour la transmission à distance des informations concernant sa position ainsi que, ce qui est plus important, celles concernant le nombre d'objets (2) présents dans sa portée d'interception automatiquement ou sur demande par l'intermédiaire du réseau public vers un site internet ou par l'intermédiaire d'un service de courts messages de téléphonie cellulaire, avec la possibilité de régler une fonction d'alarme en cas de perte de signal d'un seul objet (2) surveillé de sorte qu'un service de repérage à distance est prévu même en cas d'absence d'un réseau de répéteurs territoriaux et peut également fonctionner sans signal de GPS, l'information qu'un objet (2) s'éloigne étant toutefois suffisante.

10. Système de repérage (1) selon l'une quelconque des revendications précédentes, **caractérisé en ce que** ledit émetteur-récepteur (3.1) renferme des informations concernant sa propre position dans sa mémoire, lesdites informations étant transférées par radio ou par câble lors de n'importe quelle installation, ledit émetteur-récepteur (3.1) pouvant également communiquer, en plus de sa position, des informations concernant la fiabilité de ladite position lorsque ledit émetteur-récepteur équipé en outre d'un capteur de position a été précédemment déconnecté du réseau public en débranchant la prise femelle (5) du PN/modem/LAN et/ou lorsqu'il a été déplacé de sa position initiale.

11. Système de repérage (1) selon l'une quelconque des revendications précédentes, **caractérisé en ce que** l'émetteur-récepteur (3, 3.1) peut communiquer la fiabilité des informations transmises concernant sa position grâce à un sous-programme de micrologiciel et comparer sa position préétablie lors de l'installation avec la position détectée par d'autres émetteurs-récepteurs (3 ou 3.1).

12. Système de repérage (1) selon l'une quelconque des revendications précédentes, **caractérisé en ce que** ledit émetteur-récepteur (3.1) est équipé d'un boîtier (7) de taille réduite de la même manière qu'un téléphone cellulaire pour être facilement portable.

13. Système de repérage (1) selon la revendication 12, **caractérisé en ce que** ce ledit émetteur-récepteur (3.1 ) équipé d'un boîtier portatif (7) peut être monté à l'intérieur des véhicules, la batterie interne (11) desdits véhicules étant également utilisée comme alimentation électrique de secours.

14. Système de repérage (1) selon les revendications 12 et 13, **caractérisé en ce que** ledit émetteur-récepteur (3.1) est optionnellement équipé d'un module Bluetooth ou analogue logé à l'intérieur ou monté à l'extérieur de l'émetteur-récepteur extérieur (3.1) et connecté à la prise femelle (5) de ce dernier.

15. Système de repérage (1) selon les revendications 12, 13 et 14, **caractérisé en ce que** ledit module Bluetooth sert à la connexion à un dispositif externe rassemblant des données provenant des capteurs-actionneurs du véhicule et du système de navigation GPS de celui-ci qui reçoit la position depuis un émetteur (4) renseignée par le réseau sans fil d'émetteur-récepteur (3, 3.1) depuis l'émetteur-récepteur (3.1) en utilisant un format de données de son protocole qui est compatible avec les systèmes GPS ou analogues (par exemple "NMEA" ou analogues) en ce qui concerne les données de position.

16. Système de repérage (1) selon les revendications 12 et 13, **caractérisé en ce que** ledit émetteur-récepteur (3.1) est optionnellement équipé d'un câble de communication à connecter directement à la prise femelle (5) pour la connexion d'un dispositif externe ayant la fonction de rassembler des données provenant des capteurs-actionneurs du véhicule ainsi que du système de navigation GPS de ce même véhicule qui reçoit la position depuis un émetteur (4) renseignée par le réseau sans fil d'émetteur-récepteur (3, 3.1) depuis l'émetteur-récepteur (3.1) en utilisant un format de communication de son protocole compatible avec les systèmes de GPS ou analogues (par exemple "NMEA" ou analogues) en ce qui concerne les données de position.

17. Système de repérage (1) selon l'une quelconque des revendications précédentes, **caractérisé en ce que** ledit réseau à constitution automatique prend les émetteurs-récepteurs (3, 3.1) en considération de la même manière que les émetteurs (4) et **en ce qu'**il les localise ensuite et détecte leurs paramètres.

18. Système de repérage (1) selon l'une quelconque des revendications précédentes, **caractérisé en ce que** lesdits logiciels de communication ou protocoles parmi les répéteurs (3 et 3.1) et les émetteurs (4) communiquent à une vitesse relative supérieure à 100 km/h de sorte que même un véhicule mobile peut être utilisé comme support mobile pour un émetteur-récepteur afin d'augmenter la portée d'interception du réseau d'émetteur-récepteur (3, 3.1).

19. Système de repérage (1) selon l'une quelconque des revendications précédentes, **caractérisé en ce que** ledit protocole est ouvert, c'est-à-dire que les champs de la trame peuvent être utilisés pour des applications générales et peuvent également réaliser une communication avec l'appareil pour une lecture à distance, une automatisation domestique, la détection de trafic de données, un transpondeur d'identification par radiofréquence (RFID) de nouvelle génération (standard mondial de code électronique de produit (EPC) de deuxième génération) en version ultra-haute fréquence (UHF) et/ou de 2.4 GHz, ou, le prédisposer par l'intermédiaire de micrologiciels en usine, lors de l'installation ou ensuite par radio, la transmission de balises capables de faire fonctionner le transpondeur présent dans leur portée pour permettre le repérage et l'identification .

20. Système de repérage (1) selon l'une quelconque des revendications précédentes, **caractérisé en ce que** ledit émetteur-récepteur (3, 3.1) peut être fabriqué sous la forme et avec les dimensions d'une carte de matériel informatique d'origine (OEM) à intégrer dans un navigateur satellite déjà disponible sur le marché.

21. Système de repérage (1) selon l'une quelconque des revendications précédentes, **caractérisé en ce que** ledit émetteur (4) est enfermé dans un boîtier résistant aux chocs (14) avec une protection appropriée, une petite taille et présentant extérieurement un numéro de série (15) d'identification de l'émetteur contenu à l'intérieur, et prévu avec une antenne flexible (16) à l'extérieur du boîtier (14), ledit boîtier (14) étant également équipé de moyens d'accrochage (17) pour le fixer à une ceinture, un collet, un collier ou n'importe quel autre élément (18) pour intégrer l'émetteur (4) à l'objet (2).

22. Système de repérage (1) selon l'une quelconque des revendications précédentes, **caractérisé en ce que** ledit émetteur (4) peut être fabriqué sous la forme et avec les dimensions d'une carte de matériel informatique d'origine (OEM) pouvant être intégrée.

23. Système de repérage (1) selon l'une quelconque des revendications précédentes, **caractérisé en ce que** lesdits émetteurs (4) sont utilisés comme récepteurs prévus avec des appareils et des micrologiciels semblables à ceux des émetteurs-récepteurs (3, 3.1) lors du réglage des paramètres de l'émetteur tels que la fréquence de transmission du signal ou même lorsque des communications sont permutées non seulement en mode de repérage de position mais également en mode d'identification afin d'être compatibles avec le standard EPC mondial de deuxième génération en version fréquence ultra-haute (UHF) et/ou de 2.4 GHz, ou encore, si prédisposé par l'intermédiaire des micrologiciels, de recevoir des balises ou de transmettre de manière synchronisée.

24. Système de repérage (1) selon l'une quelconque des revendications précédentes, **caractérisé en ce que** des émetteurs (4) sont équipés de capteurs internes (pour détecter la pression atmosphérique, la température, l'humidité, etc.) pour permettre la transmission des données détectées par les capteurs en plus de celles concernant leur identification et leur position.

25. Système de repérage (1) selon l'une quelconque des revendications précédentes, **caractérisé en ce que** lesdits émetteurs (4) et émetteurs-récepteurs (3, 3.1) en mode de transmission utilisent leur mémoire interne pour enregistrer leurs positions lorsqu'ils utilisent un module GPS fonctionnant toujours en mode FAIBLE-PUISSANCE en association avec un module SRD interne sans fil, et qu'ils utilisent en mode d'émetteur-récepteur (3.1) les positions des autres émetteurs (4) dans tous les intervalles de temps au cours lesquels ils n'étaient pas précédemment détectables par l'émetteur-récepteur (3, 3.1) pour les transmettre ensuite par l'intermédiaire de la liaison radio.
